(19) Europäisches Patentamt
European Patent Office
Office européen des brevets

(11) **EP 3 049 665 B1**

(12) **EUROPEAN PATENT SPECIFICATION**

(45) Date of publication and mention
of the grant of the patent:
**01.11.2017 Bulletin 2017/44**

(51) Int Cl.:
*F02M 31/16* (2006.01)   *F02D 19/06* (2006.01)
*F02D 41/00* (2006.01)   *F02D 19/08* (2006.01)

(21) Application number: **14777558.9**

(22) Date of filing: **26.09.2014**

(86) International application number:
**PCT/EP2014/070602**

(87) International publication number:
**WO 2015/044334 (02.04.2015 Gazette 2015/13)**

(54) **FUEL SUPPLY SYSTEM FOR AN INTERNAL COMBUSTION ENGINE AND RELATIVE FUEL CHANGE OVER PROCEDURE**

KRAFTSTOFFVERSORGUNGSSYSTEM FÜR EINE BRENNKRAFTMASCHINE UND ZUGEHÖRIGES KRAFTSTOFFUMSTELLUNGSVERFAHREN

SYSTÈME D'ALIMENTATION EN CARBURANT POUR UN MOTEUR À COMBUSTION INTERNE ET PROCÉDÉ DE CHANGEMENT DE CARBURANT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2013 IT MI20131599**

(43) Date of publication of application:
**03.08.2016 Bulletin 2016/31**

(73) Proprietor: **Alfa Laval Corporate AB
221 00 Lund (SE)**

(72) Inventor: **SETTI, Pietro
I-20900 Monza (MB) (IT)**

(74) Representative: **Alfa Laval Attorneys
Alfa Laval Corporate AB
Patent Department
P.O. Box 73
221 00 Lund (SE)**

(56) References cited:
EP-A1- 2 211 041     WO-A1-2011/088830
DE-A1- 19 828 772     JP-A- 2010 270 719

EP 3 049 665 B1

**Description**

The present invention refers to a system for supplying at least two fuels into an internal combustion engine, as well as to a change over procedure of said fuels.

The increasingly stringent standards for environmental protection have led to regulation of the polluting emissions produced by internal combustion engines. Also in the field of maritime transportation the International Maritime Organization (IMO), has introduced its own standards for preventing atmospheric pollution. These standards require frequent fuel change over procedures in the engines of ships.

The change over procedures in marine engines are carried out in terms of variation of the type of fuel used in the engine, as occurs for example in so called *"bi-fuel"* automobiles (petrol/GPL or petrol/methane). For example, in order to respect the current standards in given geographical areas, it may be necessary for a ship to change over from a first fuel consisting of heavy oils generally called HFO (acronym of "Heavy Fuel Oil"), typically with high sulphur content, to a second fuel generally called MGO (acronym of "Marine Gas Oil"), typically with low sulphur content, necessary during navigation in certain geographical areas known as ECAs (acronym of "Emission Control Areas"), or during docking in a port.

Each individual change over procedure involves a variation of the chemical-physical parameters between the first fuel currently used for propulsion and the second fuel that must replace the first. These parameters usually consist of the viscosity and the injection temperature of each fuel. In general, the viscosity of a liquid is the resistance to flowing due to the friction forces between adjacent layers of the liquid itself. The viscosity decreases as the temperature increases and it determines the possibility of pumping, of atomisation and of lubrication of the fuel.

In order to preserve engines and the relative accessory components from thermal shocks and from other possible drawbacks, change over procedures must take place in the most gradual and careful manner possible. For example, the viscosity of the fuel in use and the variation in temperature must never exceed certain threshold values in order to avoid damaging the engine supply devices. In some cases auxiliary cooling systems are used to reduce the temperature and best deliver the fuel to the engine.

Every engine manufacturer normally indicates the maximum temperature differential for each single minute that can be considered acceptable for the correct operation of a specific engine during the change over step. The viscosity must also be kept within certain design limits in order for the transition from one fuel to another to take place correctly.

In known change over procedures, such as for example those disclosed in documents DE 198 28 772 B4, EP 2 336 529 A2, US 2011/0000549 A1, WO 2007/109914 A1, WO 2011/088830 A1, WO 2012/117152 A1 and WO 2012/136208 A1, particular attention is paid to the temperature variations of the fuel. Conversely, such known change over procedures do not always ensure that the viscosity of the fuel does not exceed its limit values in certain change over conditions.

Also JP 2010 270719 A document discloses a device for supplying fuel for an internal combustion engine in which a change over procedure is performed by mainly controlling the temperature values of the two fuels, and/or of their mixture (defined as a blended fuel), supplied in the internal combustion engine. The control operation of the viscosity of said fuels is in fact considered as a secondary operation.

The aim of the present invention is therefore to provide a system for supplying at least two fuels into an internal combustion engine, as well as a change over procedure of said fuels, which is able to overcome the aforementioned drawbacks of the prior art in an extremely simple, cost-effective and particularly functional manner.

In detail, an object of the present invention is to provide a system for supplying at least two fuels into an internal combustion engine and a change over procedure of said fuels that ensure that the viscosity, during the transition steps from one fuel to another, never exceeds certain limit values.

Another object of the present invention is to provide a system for supplying at least two fuels into an internal combustion engine and a change over procedure of said fuels that preserve the engine and the relative components from potential damage caused by the change over procedure itself.

This aim and these objects according to the present invention are achieved by providing a system for supplying at least two fuels into an internal combustion engine and a change over procedure of said fuels as outlined in the independent claims.

Further characteristics of the invention are highlighted by the dependent claims, which are an integral part of the present description.

The characteristics and advantages of a system for supplying at least two fuels into an internal combustion engine and a change over procedure of said fuels according to the present invention will become clearer from the following description, given as an example and not for limiting purposes, referring to the attached schematic drawings, in which:

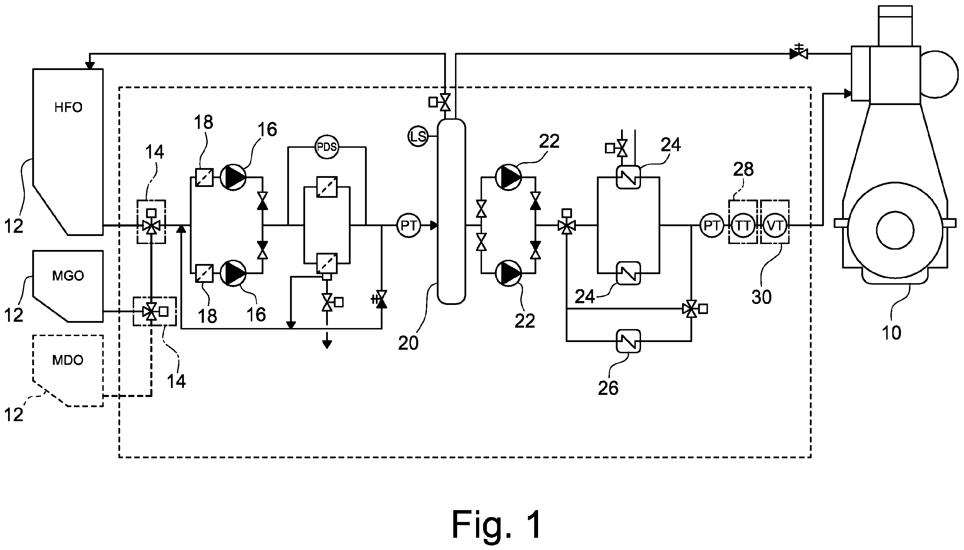

figure 1 is a schematic view of a system for supplying at least two fuels into an internal combustion engine according to the present invention;

figure 2 is a graph showing the temperature gradient of the fuel or of the fuel blend during the transition step as a function of time;

figure 3 is a graph showing the viscosity gradient of the fuel or of the fuel blend during the transition step as a function of time; and

figure 4 is a graph showing the percentages of two given fuels that supply a generic engine during the transition step as a function of time.

With reference to the figures, a system for supplying at least two fuels into an internal combustion engine, indicated with reference numeral 10, and a change over procedure of said fuels according to the present invention are shown.

The system comprises two or more storage tanks 12 for corresponding fuels that are different from each other, like for example Heavy Fuel Oil (HFO), Marine Diesel Oil (MDO) or Marine Gas Oil (MGO) or mixtures thereof. Each storage tank 12 has a respective switch valve 14 associated with it, capable of selectively managing the sending of one or more predetermined fuels to one or more supply pumps 16 with relative filters 18.

The supply pumps 16 operate to send the fuel or the fuels to a mixing/deaeration chamber 20. From the mixing/deaeration chamber 20, through further pumps 22, the fuel or fuel blend is sent to the engine 10.

On the duct for supplying the fuel or the fuel blend to the engine 10, arranged between the mixing/deaeration chamber 20 and the engine 10 itself, there can be:

- one or more heating means 24;
- one or more cooling means 26;
- at least one temperature sensor 28; and
- at least one viscosity sensor 30.

In the change over procedure the target temperature $T$ of the fuel or of the fuel blend, in other words the temperature $T$ that such a fuel or the fuel blend should have in the step of introduction into the engine 10, can be selected by the operator, or it can be calculated from a predetermined value of the viscosity with the ASTM D341 equation:

$$\log(\log(v + 0{,}7)) = A - B \log T \qquad (1)$$

From which:

$$T = 10^{\frac{A - \log(\log(v + 0{,}7))}{B}} \qquad (2)$$

where:

$v$ is the target value of the viscosity that the fuel or the fuel blend should have in the step of introduction into the engine 10;

$A$ and $B$ are the ASTM D341 constants calculated for each fuel as a function of the viscosity and at predetermined temperatures:

$$B = \frac{\log(\log(v_{@140°C} + 0{,}7)) - \log(\log(v_{@50°C} + 0{,}7))}{\log(50°C + 273{,}15) - \log(140°C + 273{,}15)} \qquad (3)$$

$$A = \log(\log(v_{@50°C} + 0{,}7)) + (B \log(50°C + 273{,}15)) \qquad (4)$$

where $v_{@50°C}$ is the viscosity of that given fuel at 50°C and $v_{@140°C}$ is the viscosity of that given fuel at 140°C. It should be considered that the reference temperatures used up to now are examples: indeed, different temperatures could also be used according to requirements.

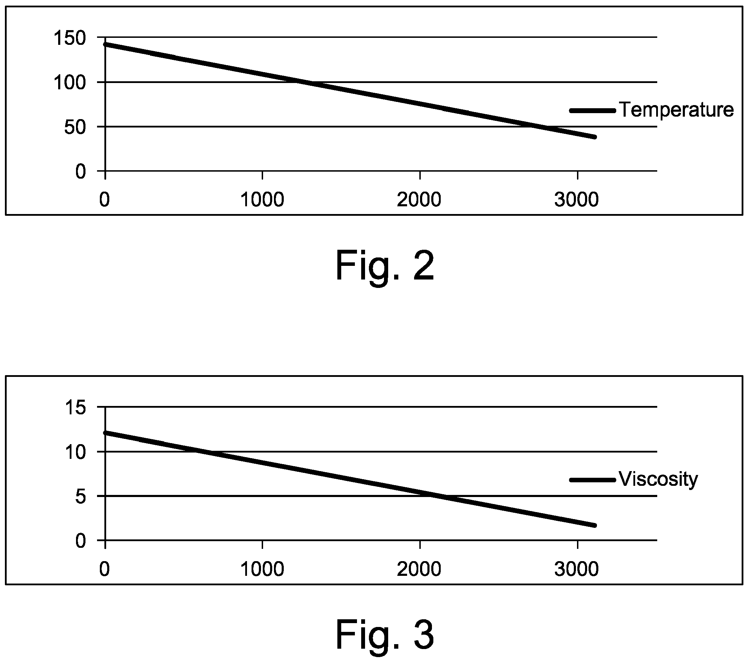

During the change over procedure the system must maintain a certain thermal gradient (figure 2) to avoid thermal shocks on the engine 10. The variation in temperature of the fuel $\delta T$ is defined as a parameter by the operator. Normally, it is equal to 2°C per minute. The initial temperature $T_0$ is equal to the current temperature of the engine 10 supplied with the fuel used prior to starting the change over procedure. The target temperature *T*, on the other hand, is that defined in equation (2) given above.

Consequently, the time *t* (in seconds) required for the temperature transition step is defined as:

$$t = \frac{|T_0 - T|}{(\delta T / 60)} \qquad (5)$$

During the change over procedure the viscosity of the fuel or of the fuel blend introduced into the engine 10 must also be controlled to avoid clogging, seizure or other problems to the injectors and/or to the supply pumps 22 of the engine 10. The system must therefore keep the viscosity value within the limits set by the engineer. In order to do this the system will set a certain viscosity gradient, defined in figure 3 as:

$$\delta v = \frac{|v_{0} - v|}{t} \qquad (6)$$

where:

$\delta v$ is the viscosity variation or gradient;
$v$ is the target value of the viscosity;
$v_0$ is the viscosity of the fuel prior to starting the change over procedure;
*t* is the time defined in the equation (5) given above.

The system will therefore keep the viscosity of the fuel or of the fuel blend around the function thus generated. The viscosity gradient $\delta v$ could also not be constant and thus generate a non-linear function during the change over procedure.

The viscosity transition step can be delayed or brought forward by a few minutes with respect to the temperature transition step, so as to make the change over procedure homogeneous.

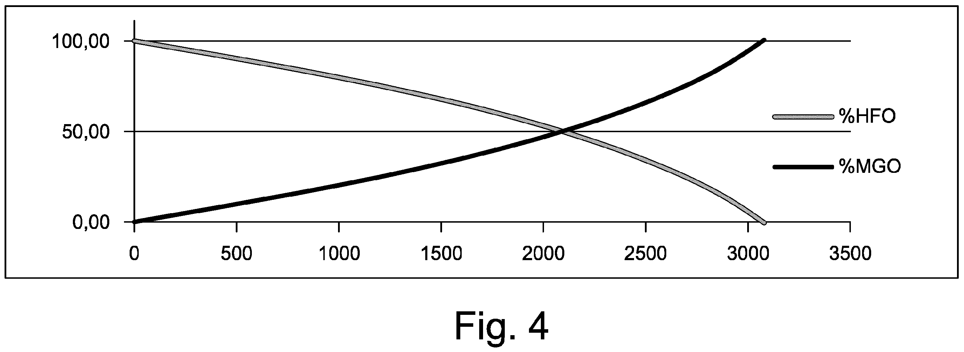

In order to keep control of the temperature and viscosity transition steps described up to now it is necessary to control the composition of the fuel blend that is generated during the change over procedure (figure 4). The composition of a certain fuel blend that is able to respect a given temperature and a given viscosity is defined by the Refutas equation:

$$VBN = 14{,}534 * \ln[\ln(v + 0{,}8)] + 10{,}975 \qquad (7)$$

$$VBN_{blend} = [\%_{F1} * VBN_{F1}] + [\%_{F2} * VBN_{F2}] + \cdots + [\%_{Fn} * VBN_{Fn}] \qquad (8)$$

where:

*VBN* is defined as *"Viscosity Blending Number"* and is a parameter that depends solely on the viscosity of the fuel or of the fuel blend;
$\%_{F1}$ is the percentage of the first fuel *F1,* or fuel formerly used in the engine 10, which makes up the fuel blend;
$\%_{F2}$ is the percentage of the second fuel *F2,* or fuel to be used currently in the engine 10, which makes up the fuel blend.

During the change over procedure the calculation of the viscosity and of the *VBN* value for each of the first fuel *F1* and the second fuel *F2* is carried out with the following equations:

$$v_{F1_{(t)}} = 10^{10^{\left(A - \left(B \log\left(T_{(t)}\right)\right)\right)}} - 0{,}7 \qquad (9)$$

$$VBN_{F1_{(t)}} = 14{,}534 * \ln\left[\ln\left(v_{F1_{(t)}} + 0{,}8\right)\right] + 10{,}975 \qquad (10)$$

$$v_{F2_{(t)}} = 10^{10^{\left(A - \left(B\log\left(T_{(t)}\right)\right)\right)}} - 0{,}7 \qquad (11)$$

$$VBN_{F2_{(t)}} = 14{,}534 * \ln\left[\ln\left(v_{F2_{(t)}} + 0{,}8\right)\right] + 10{,}975 \qquad (12)$$

where:

$v_{F1_{(t)}}$ is the viscosity of the first fuel *F1* at a given temperature *T* as a function of time *t*;
$v_{F2_{(t)}}$ is the viscosity of the second fuel *F2* at a given temperature *T* as a function of time *t*.

During the change over procedure the *VBN* value for the fuel blend consisting of the first fuel *F1* and the second fuel *F2* is also calculated:

$$VBN_{(t)} = 14{,}534 * \ln\left[\ln\left(v_{(t)} + 0{,}8\right)\right] + 10{,}975 \qquad (13)$$

where $v_{(t)}$ is the viscosity as a function of time *t*, based on the equation (6) given above, which the fuel blend should have in the step of introduction into the internal combustion engine 10.

The percentage, for each instant, of each of the first fuel *F1* and the second fuel *F2* is thus calculated as:

$$\%_{F1_{(t)}} = \frac{\left(VBN_{(t)} - VBN_{F2_{(t)}}\right)}{\left(VBN_{F1_{(t)}} - VBN_{F2_{(t)}}\right)} \qquad (14)$$

$$\%_{F2_{(t)}} = \frac{\left(VBN_{(t)} - VBN_{F1_{(t)}}\right)}{\left(VBN_{F2_{(t)}} - VBN_{F1_{(t)}}\right)} \qquad (15)$$

The percentage $\%_{F1_{(t)}}$ of the first fuel *F1* and the percentage $\%_{F2_{(t)}}$ of the second fuel *F2*, obtained with the equations (14) and (15) given above, constitute the fuel blend necessary at each instant to ensure the desired instantaneous viscosity at the current temperature. The percentage $\%_{F1_{(t)}}$ of the first fuel *F1* and the percentage $\%_{F2_{(t)}}$ of the second fuel *F2* entering into the engine 10 are modified through the switch valves 14 of the system.

The amount of fuel coming out from the system is not identical to the amount of fuel entering the system itself. This is due to the fact that the flow rate of the supply pumps 22 is equal to a multiple of the maximum fuel consumption value of the engine 10, whereas the amount of fuel entering the system is equal to the instantaneous consumption *C* of the engine 10 itself.

The volume *V* of the entire system, the instantaneous consumption *C* and the aforementioned difference in amount of fuel influence the percentage $\%_{F1_{(t)}}$ of the first fuel *F1* and the percentage $\%_{F2_{(t)}}$ of the second fuel *F2*. In other words, the percentages $\%_{F1_{(t)}} = \%_{F1Out_{(t)}}$ and $\%_{F2_{(t)}} = \%_{F2Out_{(t)}}$ of the respective fuels *F1* and *F2* coming out from the system are not equal to the percentages $\%_{F1In_{(t)}}$ and $\%_{F2In_{(t)}}$ of the respective fuels *F1* and *F2* entering the system.

The volume *V* of the entire system is defined as a parameter. The fuel consumption is calculated through one or more suitable flowmeters installed in the system. The percentages $\%_{F1In_{(t)}}$ and $\%_{F2In_{(t)}}$ of the respective fuels *F1* and *F2* entering into the system are calculated, respectively, with the following equations:

$$\%_{F1In_{(t)}} = \frac{Q_{F1In(t)}}{Q_{In(t)}} \qquad (16)$$

$$\%_{F2In_{(t)}} = \frac{Q_{F2In(t)}}{Q_{In(t)}} \qquad (17)$$

where:

$\%_{F1In(t)}$ is the percentage of the first fuel *F1* entering into the system;
$Q_{F1In(t)}$ is the amount of the first fuel *F1* entering into the system;
$\%_{F2In(t)}$ is the percentage of the second fuel *F2* entering into the system;
$Q_{F2In(t)}$ is the amount of the second fuel *F2* entering into the system;
$Q_{In(t)}$ is the total amount of fuel entering into the system, equal to the instantaneous consumption *C* of the engine 10.

The amount of each fuel *F1* and *F2* entering into the system is calculated with the following equations:

$$Q_{F1_{In(t)}} =$$

$$Q_{F1_{Out(t)}} + \left(\frac{V}{C_{(t)}^2}\right)\left[\left(Q_{F1_{Out(t)}} - Q_{F1_{Out(t-1)}}\right)C_{(t)} - Q_{F1_{Out(t)}}\left(C_{(t)} - C_{(t-1)}\right)\right] \Big/ \left(t - (t-1)\right)$$

$$(18)$$

$$Q_{F2_{In(t)}} =$$

$$Q_{F2_{Out(t)}} + \left(\frac{V}{C_{(t)}^2}\right)\left[\left(Q_{F2_{Out(t)}} - Q_{F2_{Out(t-1)}}\right)C_{(t)} - Q_{F2_{Out(t)}}\left(C_{(t)} - C_{(t-1)}\right)\right] \Big/ \left(t - (t-1)\right)$$

$$(19)$$

where:

$Q_{F1Out(t)}$ is the amount of the first fuel *F1* coming out from the system, calculated as $Q_{F1Out(t)} = C_{(t)}\%_{F1(t)}$;
$Q_{F2Out(t)}$ *is the amount of the second fuel *F2* coming out from the system, calculated as $Q_{F2Out(t)} = C_{(t)}\%_{F2(t)}$;
$C_{(t)}$ is the instantaneous consumption of the engine 10.

During the change over procedure the viscosity of the fuels is continuously controlled and a PID (Proportional-Integral-Derivative) controller corrects possible misalignments between the required viscosity and the actual viscosity of introduction of the fuel blend into the internal combustion engine 10, modifying the operation of the switch valves 14.
It has thus been seen that the system for supplying at least two fuels into an internal combustion engine and the change over procedure of said fuels according to the present invention achieve the purposes outlined earlier.
The system for supplying at least two fuels into an internal combustion engine and the change over procedure of said fuels of the present invention thus conceived can in any case undergo numerous modifications and variations, all of which are covered by the same inventive concept; moreover, all of the details can be replaced by technically equivalent elements. In practice, the materials used, as well as the shapes and sizes, can be any according to the technical requirements.
The scope of protection of the invention is therefore defined by the appended claims.

## Claims

1. Fuel change over method for an internal combustion engine (10) provided with a system for supplying a first fuel (*F1*) and at least a second fuel (*F2*), two or more storage tanks (12) for the first fuel (F1) and the second fuel (F2), each storage tank (12) having a respective switch valve (14) associated thereto that is capable of selectively managing the sending of said first fuel (*F1*) and said second fuel (*F2*), the method comprising the steps of:

   - calculation of the target temperature value (*T*) that the second fuel (*F2*) or the fuel blend of said first fuel (*F1*) and said second fuel (*F2*) should have in the step of introduction into the internal combustion engine (10);
   - variation (*δT*) of the temperature of the second fuel (*F2*), or the fuel blend of said first fuel (*F1*) and said second fuel (*F2*), in the step of introduction into the internal combustion engine (10), to reach the target temperature (*T*);

- calculation of the time ($t$) needed to reach the target temperature ($T$);
- calculation of the viscosity ($\upsilon_{F1(t)}$) of the first fuel ($F1$) and of the viscosity ($\upsilon_{F2(t)}$) of the second fuel ($F2$) at a given temperature ($T$) as a function of the time; and
- calculation of the percentage ($\%_{F1(t)}$) of the first fuel ($F1$) and of the percentage ($\%_{F2(t)}$) of the second fuel ($F2$) in the fuel blend of said first fuel ($F1$) and said second fuel ($F2$) needed at each instant to ensure the viscosity ($\upsilon_{(t)}$) which said fuel blend should have in the step of introduction into the internal combustion engine (10), so that the viscosity variation or gradient ($\delta\upsilon$) of said fuel blend introduced into the internal combustion engine (10) remains within predefined limit values during the entire fuel change over procedure through the control, performed by said switching valves (14), of the composition of said fuel blend that is generated during said change over procedure,

the method being **characterised in that** it comprises the step of:

- recalculation, according to the volume ($V$) of the supply system and of the instantaneous consumption ($C_{(t)}$) of the internal combustion engine (10), of the percentage ($\%_{F1In(t)}$) of the first fuel ($F1$) and of the percentage ($\%_{F2In(t)}$) of the second fuel ($F2$) to be introduced in the supply system, wherein said volume ($V$) of the supply system is defined as a parameter.

**2.** Method according to claim 1, **characterised in that** the percentage ($\%_{F1In(t)}$) of the first fuel ($F1$) and the percentage ($\%_{F2In(t)}$) of the second fuel ($F2$) to be introduced in the supply system, obtained as a function of the volume ($V$) of the supply system and of the instantaneous consumption ($C_{(t)}$) of the internal combustion engine (10), are recalculated as:

$$\%_{F1_{In(t)}} = \frac{Q_{F1_{In(t)}}}{Q_{In(t)}}$$

$$\%_{F2_{In(t)}} = \frac{Q_{F2_{In(t)}}}{Q_{In(t)}}$$

where:

$Q_{F1In(t)}$ is the amount of the first fuel ($F1$) entering into the supply system;
$Q_{F2In(t)}$ is the amount of the second fuel ($F2$) entering into the supply system;
$Q_{In(t)}$ is the total amount of fuel entering into the supply system, equal to the instantaneous consumption ($C_{(t)}$) of the internal combustion engine (10) .

**3.** Method according to claim 2, **characterised in that** the amounts ($Q_{F1In(t)}$, $Q_{F2In(t)}$) of each fuel ($F1$, $F2$) entering into the supply system are calculated as:

$$Q_{F1_{In(t)}}$$

$$= \left. Q_{F1_{Out(t)}} + \left(\frac{V}{C_{(t)}{}^2}\right)\left[\left(Q_{F1_{Out(t)}} - Q_{F1_{Out(t-1)}}\right)C_{(t)} - Q_{F1_{Out(t)}}\left(C_{(t)} - C_{(t-1)}\right)\right] \middle/ \left(t - (t-1)\right)\right.$$

$$Q_{F2_{In(t)}}$$

$$= \left. Q_{F2_{Out(t)}} + \left(\frac{V}{C_{(t)}{}^2}\right)\left[\left(Q_{F2_{Out(t)}} - Q_{F2_{Out(t-1)}}\right)C_{(t)} - Q_{F2_{Out(t)}}\left(C_{(t)} - C_{(t-1)}\right)\right] \middle/ \left(t - (t-1)\right)\right.$$

where:

$Q_{F1Out(t)}$ is the amount of the first fuel ($F1$) coming out from the supply system, calculated as $Q_{F1Out(t)} = C_{(t)}\%_{F1(t)}$;
$Q_{F2Out(t)}$ is the amount of the second fuel ($F2$) coming out from the supply system, calculated as $Q_{F2Out(t)} = C_{(t)}\%_{F2(t)}$;
$C_{(t)}$ is the instantaneous consumption of the internal combustion engine (10).

4. Method according to any one of the claims from 1 to 3, **characterised in that** the value of the target temperature ($T$) is calculated from a predetermined value of the viscosity with the ASTM D341 equation:

$$\log(\log(v + 0{,}7)) = A - B \log T$$

from which:

$$T = 10^{\frac{A - \log(\log(v + 0{,}7))}{B}}$$

where:

$v$ is the target value of the viscosity which the fuel or the fuel blend should have in the step of introduction into the internal combustion engine (10); $A$ and $B$ are the ASTM D341 constants calculated for each fuel ($F1$, $F2$) as a function of the viscosity and at predetermined temperatures:

$$B = \frac{\log\big(\log(v_{@y°C} + 0{,}7)\big) - \log(\log(v_{@x°C} + 0{,}7))}{\log(x°C + 273{,}15) - \log(y°C + 273{,}15)}$$

$$A = \log(\log(v_{@x°C} + 0{,}7)) + (B \log(x°C + 273{,}15))$$

where $v_{@x°C}$ is the viscosity of that given fuel at a first predetermined temperature ($x°C$) and $v_{@y°C}$ is the viscosity of that given fuel at a second predetermined temperature ($y°C$).

5. Method according to any one of the claims from 1 to 3, **characterised in that** the value of the target temperature ($T$) is selected manually by an operator.

6. Method according to any one of the claims from 1 to 5, **characterised in that** the time ($t$) needed to reach the target temperature ($T$) is calculated as:

$$t = \frac{|T_0 - T|}{(\delta T / 60)}$$

where:

$T_0$ is the starting temperature, equal to the current temperature of the internal combustion engine (10) supplied with the fuel used prior to starting the change over procedure;
$\delta T$ is the variation of the temperature of the fuel, defined by the user as a parameter.

7. Method according to claim 6, **characterised in that** the viscosity variation or gradient ($\delta v$) of said fuel blend is calculated as:

$$\delta v = \frac{|v_0 - v|}{t}$$

where:

$\delta\upsilon$ is the viscosity variation or gradient;
$\upsilon$ is the target value of the viscosity;
$\upsilon_0$ is the viscosity of the fuel prior to starting the change over procedure;
t is the time necessary to reach the target temperature (*T*).

8.  Method according to any one of the claims from 1 to 7, **characterised in that** the percentage ($\%_{F1(t)}$) of the first fuel (*F1*) and the percentage ($\%_{F2(t)}$) of the second fuel (*F2*) are calculated as:

$$\%_{F1_{(t)}} = \frac{\left(VBN_{(t)} - VBN_{F2_{(t)}}\right)}{\left(VBN_{F1_{(t)}} - VBN_{F2_{(t)}}\right)}$$

$$\%_{F2_{(t)}} = \frac{\left(VBN_{(t)} - VBN_{F1_{(t)}}\right)}{\left(VBN_{F2_{(t)}} - VBN_{F1_{(t)}}\right)}$$

where *VBN* is defined as "*Viscosity Blending Number*" and is a parameter that depends on the viscosity of the first fuel (*F1*) and on the viscosity of the second fuel (*F2*).

9.  System for switching the supply from a first fuel (*F1*) to at least a second fuel (*F2*) in an internal combustion engine (10) according to any one of the claims from 1 to 8, the system comprising:

    - two or more storage tanks (12) for the first fuel (*F1*) and the second fuel (*F2*), each storage tank (12) having a respective switch valve (14) associated thereto that is capable of selectively managing the sending of one or more preselected fuels (*F1, F2*) to one or more supply pumps (16) with relative filters (18) ;
    - a mixing/deaeration chamber (20) that receives said one or more preselected fuels (*F1, F2*) through said one or more supply pumps (16), said one or more preselected fuels (*F1, F2*) being subsequently sent to the internal combustion engine (10) through further pumps (22);
    - a duct for supplying the fuel or the fuel blend to the internal combustion engine (10), arranged between the mixing/deaeration chamber (20) and said internal combustion engine (10).

10. System according to claim 9, **characterised in that** on the duct for supplying the fuel or the fuel blend into the internal combustion engine (10) there are:

    - one or more heating means (24);
    - one or more cooling means (26);
    - at least one temperature sensor (28);
    - at least one viscosity sensor (30).

11. System according to claim 9 or 10, **characterised in that** it comprises a PID (Proportional-Integral-Derivative) controller capable of continuously checking and correcting, modifying the operation of the switching valves (14), possible misalignments between the target viscosity and the actual viscosity of the fuel blend entering into the internal combustion engine (10).

**Patentansprüche**

1.  Kraftstoffumstellungsverfahren für eine Brennkraftmaschine (10), bereitgestellt mit einem System zur Versorgung mit einem erstem Kraftstoff (*F1*) und mindestens einem zweiten Kraftstoff (*F2*), zwei oder mehr Speichertanks (12) für den ersten Kraftstoff (*F1*) und den zweiten Kraftstoff (*F2*), wobei jeder Speichertank (12) ein jeweiliges damit verbundenes Schaltventil (14) aufweist, das dazu in der Lage ist, das Senden des ersten Kraftstoffs (*F1*) und des zweiten Kraftstoffs (*F2*) selektiv zu bewältigen, wobei das Verfahren die folgenden Schritte umfasst:

- Berechnen des Zieltemperaturwertes (*T*), den der zweite Kraftstoff (*F2*) oder das Kraftstoffgemisch aus dem ersten Kraftstoff (*F1*) und dem zweiten Kraftstoff (*F2*) in dem Schritt des Einführens in die Brennkraftmaschine (10) aufweisen sollte;
- Variieren (*δT*) der Temperatur des zweiten Kraftstoffs (*F2*) oder des Kraftstoffgemischs aus dem ersten Kraftstoff (*F1*) und dem zweiten Kraftstoff (*F2*) in dem Schritt des Einführens in die Brennkraftmaschine (10), um die Zieltemperatur (*T*) zu erreichen;
- Berechnen der Zeit (*t*), die benötigt wird, um die Zieltemperatur (*T*) zu erreichen;
- Berechnen der Viskosität ($\upsilon_{F1(t)}$) des ersten Kraftstoffs (*F1*) und der Viskosität ($\upsilon_{F2(t)}$) des zweiten Kraftstoffs (*F2*) bei einer gegebenen Temperatur (*T*) als eine Funktion der Zeit; und
- Berechnen des Prozentanteils (%$_{F1(t)}$) des ersten Kraftstoffs (*F1*) und des Prozentanteils (%$_{F2(t)}$) des zweiten Kraftstoffs (*F2*) in dem Kraftstoffgemisch aus dem ersten Kraftstoff (*F1*) und dem zweiten Kraftstoff (F2), der in jedem Fall benötigt wird, um die Viskosität ($\nu_{(t)}$), die das Kraftstoffgemisch in dem Schritt des Einführens in die Brennkraftmaschine (10) aufweisen sollte, sicherzustellen, sodass die/der Viskositätsvariation oder -gradient (*δυ*) des in die Brennkraftmaschine (10) eingeführten Kraftstoffgemischs während des gesamten Kraftstoffumstellungsverfahrens durch die Steuerung, durchgeführt von den Schaltventilen (14), innerhalb von vordefinierten Grenzen der Zusammensetzung aus dem Kraftstoffgemisch bleibt, das während des Umstellungsverfahrens erzeugt wird,

wobei das Verfahren **dadurch gekennzeichnet ist, dass** es den folgenden Schritt umfasst:

- erneutes Berechnen, gemäß dem Volumen (*V*) des Versorgungssystems und des unmittelbaren Verbrauchs (*C$_{(t)}$*) der Brennkraftmaschine (10), des Prozentanteils (%$_{F1In(t)}$) des ersten Kraftstoffs (*F1*) und des Prozentanteils (%$_{F2In(t)}$) des zweiten Kraftstoffs (*F2*) zur Einführung in das Versorgungssystem, wobei das Volumen (*V*) des Versorgungssystems als ein Parameter definiert ist.

2. Verfahren nach Anspruch 1, **dadurch gekennzeichnet, dass** der Prozentanteil *(%$_{F1In(t)}$)* des ersten Kraftstoffs (*F1*) und der Prozentanteil (%$_{F2In(t)}$) des zweiten Kraftstoffs (*F2*) zur Einführung in das Versorgungssystem, erhalten als eine Funktion des Volumens (*V*) des Versorgungssystems und des unmittelbaren Verbrauchs (*C$_{(t)}$*) der Brennkraftmaschine (10), erneut berechnet werden als:

$$\%_{F1_{In(t)}} = \frac{Q_{F1_{In(t)}}}{Q_{In(t)}}$$

$$\%_{F2_{In(t)}} = \frac{Q_{F2_{In(t)}}}{Q_{In(t)}}$$

wobei:

$Q_{F1In(t)}$ die Menge des ersten Kraftstoffs (*F1*) ist, die in das Versorgungssystem eintritt;
$Q_{F2In(t)}$ die Menge des zweiten Kraftstoffs (*F2*) ist, die in das Versorgungssystem eintritt;
$Q_{In(t)}$ die Gesamtmenge an Kraftstoff ist, die in das Versorgungssystem eintritt, gleich dem unmittelbaren Verbrauch (*C$_{(t)}$*) der Brennkraftmaschine (10).

3. Verfahren nach Anspruch 2, **dadurch gekennzeichnet, dass** die Mengen ($Q_{F1In(t)}$, $Q_{F2In(t)}$) von jedem Kraftstoff (*F1, F2*), die in das Versorgungssystem eintreten, berechnet werden als:

$$Q_{F1_{In(t)}}$$
$$= Q_{F1_{Out(t)}} + \left(\frac{V}{C_{(t)}^2}\right)\left[\left(Q_{F1_{Out(t)}} - Q_{F1_{Out(t-1)}}\right)C_{(t)} - Q_{F1_{Out(t)}}\left(C_{(t)} - C_{(t-1)}\right)\right] \Big/ \left(t - (t-1)\right)$$

$$Q_{F2_{In(t)}}$$

$$= \left. Q_{F2_{Out(t)}} + \left(\frac{V}{C_{(t)}^2}\right)\left[\left(Q_{F2_{Out(t)}} - Q_{F2_{Out(t-1)}}\right)C_{(t)} - Q_{F2_{Out(t)}}\left(C_{(t)} - C_{(t-1)}\right)\right] \middle/ \left(t - (t-1)\right)\right.$$

wobei:

$Q_{F1_{Out(t)}}$ die Menge des ersten Kraftstoffs (*F1*) ist, die aus dem Versorgungssystem austritt, berechnet als $Q_{F1_{In(t)}} = C_{(t)}\%_{F1_{(t)}}$;

$Q_{F2_{Out(t)}}$ die Menge des zweiten Kraftstoffs (*F2*) ist, die aus dem Versorgungssystem austritt, berechnet als $Q_{F2_{Out(t)}} = C_{(t)}\%_{F2_{(t)}}$;

$C_{(t)}$ der unmittelbare Verbrauch der Brennkraftmaschine (10) ist.

4. Verfahren nach einem der Ansprüche 1 bis 3, **dadurch gekennzeichnet, dass** der Wert der Zieltemperatur (*T*) aus einem zuvor festgelegten Wert der Viskosität berechnet wird, mit der ASTM D341-Gleichung:

$$\log(\log(v + 0{,}7)) = A - B \log T$$

aus der folgt:

$$T = 10^{\frac{A - \log(\log(v + 0{,}7))}{B}}$$

wobei:

$v$ der Zielwert der Viskosität ist, den der Kraftstoff oder das Kraftstoffgemisch in dem Schritt des Einführens in die Brennkraftmaschine (10) aufweisen sollte;

*A* und *B* die ASTM D341-Konstanten sind, berechnet für jeden Kraftstoff (*F1, F2*) als eine Funktion der Viskosität und bei zuvor festgelegten Temperaturen:

$$B = \frac{\log\left(\log(v_{@y°C} + 0{,}7)\right) - \log(\log(v_{@x°C} + 0{,}7))}{\log(x°C + 273{,}15) - \log(y°C + 273{,}15)}$$

$$A = \log(\log(v_{@x°C} + 0{,}7)) + (B \log(x°C + 273{,}15))$$

wobei $v_{@x°C}$ die Viskosität des gegebenen Kraftstoffs bei einer ersten zuvor festgelegten Temperatur (*x°C*) ist und $v_{@x°C}$ die Viskosität des gegebenen Kraftstoffs bei einer zweiten festgelegten Temperatur (*y°C*) ist.

5. Verfahren nach einem der Ansprüche 1 bis 3, **dadurch gekennzeichnet, dass** der Wert der Zieltemperatur (*T*) manuell von einem Bediener ausgewählt wird.

6. Verfahren nach einem der Ansprüche 1 bis 5, **dadurch gekennzeichnet, dass** die Zeit (*t*), die benötigt wird, um die Zieltemperatur (*T*) zu erreichen, berechnet wird als:

$$t = \frac{|T_0 - T|}{(\delta T / 60)}$$

wobei:

$T_0$ die Ausgangstemperatur ist, gleich der aktuellen Temperatur der Brennkraftmaschine (10), die mit dem Kraftstoff versorgt wird, der vor dem Beginn des Umstellungsverfahrens verwendet wird;

$\delta T$ die Variation der Temperatur des Kraftstoffs ist, definiert durch den Nutzer als ein Parameter.

**7.** Verfahren nach Anspruch 6, **dadurch gekennzeichnet, dass** die/der Viskositätsvariation oder -gradient ($\delta \upsilon$) des Kraftstoffgemischs berechnet wird als:

$$\delta \upsilon = \frac{|\upsilon_{0_-}\upsilon|}{t}$$

wobei:

$\delta \upsilon$ die/der Viskositätsvariation oder -gradient ist;
$\upsilon$ der Zielwert der Viskosität ist;
$\upsilon_0$ die Viskosität des Kraftstoffs vor dem Beginn des Umstellungsverfahrens ist;
$t$ die Zeit ist, die benötigt wird, um die Zieltemperatur ($T$) zu erreichen.

**8.** Verfahren nach einem der Ansprüche 1 bis 7, **dadurch gekennzeichnet, dass** der Prozentanteil ($\%_{F1(t)}$) des ersten Kraftstoffs ($F1$) und der Prozentanteil ($\%_{F2(t)}$) des zweiten Kraftstoffs ($F2$) berechnet werden als:

$$\%_{F1_{(t)}} = \frac{\left( VBN_{(t)} - VBN_{F2_{(t)}} \right)}{\left( VBN_{F1_{(t)}} - VBN_{F2_{(t)}} \right)}$$

$$\%_{F2_{(t)}} = \frac{\left( VBN_{(t)} - VBN_{F1_{(t)}} \right)}{\left( VBN_{F2_{(t)}} - VBN_{F1_{(t)}} \right)}$$

wobei *VBN* definiert ist als Viskositätsmischungszahl und ein Parameter ist, der von der Viskosität des ersten Kraftstoffs ($F1$) und von der Viskosität des zweiten Kraftstoffs ($F2$) abhängt.

**9.** System zum Schalten der Versorgung von einem ersten Kraftstoff ($F1$) zu mindestens einem zweiten Kraftstoff ($F2$) in einer Brennkraftmaschine (10) nach einem der Ansprüche von 1 bis 8, wobei das System Folgendes umfasst:

- zwei oder mehr Speichertanks (12) für den ersten Kraftstoff ($F1$) und den zweiten Kraftstoff ($F2$), wobei jeder Speichertank (12) ein jeweiliges damit verbundenes Schaltventil (14) aufweist, das dazu in der Lage ist, das Senden von einem oder mehreren zuvor ausgewählten Kraftstoffen ($F1$, $F2$) an eine oder mehrere Versorgungspumpen (16) mit relativen Filtern (18) selektiv zu bewältigen;
- eine Misch-/Entlüftungskammer (20), die den einen oder die mehreren zuvor ausgewählten Kraftstoffe ($F1$, $F2$) durch die eine oder mehreren Versorgungspumpen (16) empfängt, wobei der eine oder die mehreren zuvor ausgewählten Kraftstoffe ($F1$, $F2$) anschließend durch weitere Pumpen (22) an die Brennkraftmaschine (10) gesendet werden;
- einen Kanal zum Versorgen der Brennkraftmaschine (10) mit dem Kraftstoff oder dem Kraftstoffgemisch, angeordnet zwischen der Misch-/Entlüftungskammer (20) und der Brennkraftmaschine (10).

**10.** System nach Anspruch 9, **dadurch gekennzeichnet, dass** es an dem Kanal zum Versorgen der Brennkraftmaschine (10) mit dem Kraftstoff oder dem Kraftstoffgemisch Folgendes gibt:

- ein oder mehrere Heizmittel (24);
- ein oder mehrere Kühlmittel (26);
- mindestens einen Temperatursensor (28);
- mindestens einen Viskositätssensor (30).

**11.** System nach Anspruch 9 oder 10, **dadurch gekennzeichnet, dass** es eine PID-(Proportional-Integral-Derivative)-Steuerung umfasst, die dazu in der Lage ist, mögliche Fehlausrichtungen zwischen der Zielviskosität und der tatsächlichen Viskosität des Kraftstoffgemischs, das in die Brennkraftmaschine (10) eintritt, durchgehend zu prüfen und durch Modifizieren des Betriebs der Schaltventile (14) zu korrigieren.

**Revendications**

1. Procédé de changement de carburant destiné à un moteur à combustion interne (10) muni d'un système permettant d'alimenter un premier carburant (*F1*) et au moins un deuxième carburant (*F2*), deux ou plus de deux réservoirs de stockage (12) pour le premier carburant (*F1*) et le deuxième carburant (*F2*), chaque réservoir de stockage (12) présentant une vanne de commutation (14) respective, associée à celui-ci, ladite vanne étant capable de gérer de manière sélective l'acheminement dudit premier carburant (*F1*) et dudit deuxième carburant (*F2*), le procédé comprenant les étapes de :

   - calcul de la valeur de température cible (T) que le deuxième carburant (*F2*) ou le mélange de carburant constitué dudit premier carburant (*F1*) et dudit deuxième carburant (*F2*) doit présenter à l'étape d'introduction dans le moteur à combustion interne (10) ;
   - variation ($\delta T$) de la température du deuxième carburant (*F2*), ou du mélange de carburant constitué dudit premier carburant (*F1*) et dudit deuxième carburant (*F2*), à l'étape d'introduction dans le moteur à combustion interne (10), afin d'atteindre la température cible *(T)* ;
   - calcul du temps (*t*) nécessaire pour atteindre la température cible *(T)* ;
   - calcul de la viscosité ($\upsilon_{F1_{(t)}}$) du premier carburant (*F1*) et de la viscosité ($\upsilon_{F2_{(t)}}$) du deuxième carburant (*F2*) à une température donnée *(T)* en fonction du temps ; et
   - calcul du pourcentage ($\%_{F1_{(t)}}$) du premier carburant (*F1*) et du pourcentage ($\%_{F2_{(t)}}$) du deuxième carburant (*F2*) dans le mélange de carburant constitué dudit premier carburant (*F1*) et dudit deuxième carburant (*F2*) nécessaire à chaque instant pour assurer la viscosité ($\upsilon_{(t)}$) que ledit mélange de carburant doit présenter à l'étape d'introduction dans le moteur à combustion interne (10), de sorte que la variation ou le gradient de viscosité ($\delta\upsilon$) dudit mélange de carburant introduit dans le moteur à combustion interne (10) reste à l'intérieur de valeurs limites prédéfinies pendant la totalité de la procédure de changement de carburant par l'intermédiaire de la commande, mise en oeuvre grâce auxdites vannes de commutation (14), de la composition dudit mélange de carburant qui est généré pendant ladite procédure de changement,

   le procédé étant **caractérisé en ce qu'il** comprend les étapes de :

   - recalcul, selon le volume (*V*) du système d'alimentation et de la consommation instantanée ($C_{(t)}$) du moteur à combustion interne (10), du pourcentage ($\%_{F1In_{(t)}}$) du premier carburant (*F1*) et du pourcentage ($\%_{F2In_{(t)}}$) du deuxième carburant (*F2*) à introduire dans le système d'alimentation, dans lequel ledit volume (*V*) du système d'alimentation est défini comme étant un paramètre.

2. Procédé selon la revendication 1, **caractérisé en ce que** le pourcentage ($\%_{F1In_{(t)}}$) du premier carburant (*F1*) et le pourcentage ($\%_{F2In_{(t)}}$) du deuxième carburant (*F2*) à introduire dans le système d'alimentation, obtenu en fonction du volume (*V*) du système d'alimentation et de la consommation instantanée ($C_{(t)}$) du moteur à combustion interne (10), sont recalculés de la manière ci-dessous :

$$\%_{F1_{In(t)}} = \frac{Q_{F1_{In(t)}}}{Q_{In(t)}}$$

$$\%_{F2_{In(t)}} = \frac{Q_{F2_{In(t)}}}{Q_{In(t)}}$$

où :

   $Q_{F1In_{(t)}}$ est la quantité du premier carburant (*F1*) qui pénètre dans le système d'alimentation ;
   $Q_{F2In_{(t)}}$ est la quantité du deuxième carburant (*F2*) qui pénètre dans le système d'alimentation ;
   $Q_{In(t)}$ est la quantité totale de carburant pénétrant dans le système d'alimentation, égale à la consommation instantanée ($C_{(t)}$) du moteur à combustion interne (10).

3. Procédé selon la revendication 2, **caractérisé en ce que** les quantités ($Q_{F1In_{(t)}}$, $Q_{F2In_{(t)}}$) de chaque carburant (*F1, F2*) pénétrant dans le système d'alimentation sont calculées de la manière suivante :

$$Q_{F1_{In(t)}} = Q_{F1_{Out(t)}} + \left(\frac{V}{C_{(t)}^2}\right)\left[\left(Q_{F1_{Out(t)}} - Q_{F1_{Out(t-1)}}\right)C_{(t)} - Q_{F1_{Out(t)}}\left(C_{(t)} - C_{(t-1)}\right)\right]/(t - (t-1))$$

$$Q_{F2_{In(t)}} = Q_{F2_{Out(t)}} + \left(\frac{V}{C_{(t)}^2}\right)\left[\left(Q_{F2_{Out(t)}} - Q_{F2_{Out(t-1)}}\right)C_{(t)} - Q_{F2_{Out(t)}}\left(C_{(t)} - C_{(t-1)}\right)\right]/(t - (t-1))$$

où :

$Q_{F1Out_{(t)}}$ est la quantité du premier carburant (*F1*) sortant du système d'alimentation, calculée grâce à $Q_{F1Out_{(t)}}$ = $C_{(t)}\%_{F1_{(t)}}$ ;
$Q_{F2Out_{(t)}}$ est la quantité du deuxième carburant (*F2*) sortant du système d'alimentation, calculée sous la forme $Q_{F2Out_{(t)}} = C_{(t)}\%_{F2_{(t)}}$ ;
$C_{(t)}$ est la consommation instantanée du moteur à combustion interne (10).

4. Procédé selon l'une quelconque des revendications 1 à 3, **caractérisé en ce que** la valeur de la température cible *(T)* est calculée à partir d'une valeur prédéterminée de la viscosité grâce à l'équation ASTM D341 :

$$\log(\log(v + 0{,}7)) = A - B \log T$$

à partir de laquelle :

$$T = 10^{\frac{A - \log(\log(v+0{,}7))}{B}}$$

où :

$v$ est la valeur cible de la viscosité que le carburant ou le mélange de carburant doit présenter à l'étape d'introduction dans le moteur à combustion interne (10) ;
*A* et *B* sont les constantes ASTM D341 calculées pour chaque carburant (*F1, F2*) en fonction de la viscosité et pour des températures prédéterminées :

$$B = \frac{\log\left(\log(v_{@y°C} + 0{,}7)\right) - \log\left(\log(v_{@x°C} + 0{,}7)\right)}{\log(x°C + 273{,}15) - \log(y°C + 273{,}15)}$$

$$A = \log\left(\log(v_{@x°C} + 0{,}7)\right) + \left(B \log(x°C + 273{,}15)\right)$$

où $v_{@x°C}$ est la viscosité dudit carburant donné pour une première température prédéterminée (*x°C*) et $v_{@y°C}$ est la viscosité dudit carburant donné pour une deuxième température prédéterminée (*y°C*).

5. Procédé selon l'une quelconque des revendications 1 à 3, **caractérisé en ce que** la valeur de la température cible *(T)* est sélectionnée manuellement par un opérateur.

6. Procédé selon l'une quelconque des revendications 1 à 5, **caractérisé en ce que** le temps (*t*) nécessaire pour atteindre la température cible *(T)* est calculé de la manière suivante :

$$t = \frac{|T_0 - T|}{(\delta T / 60)}$$

où :

> $T_0$ est la température départ, égale à la température actuelle du moteur à combustion interne (10) alimenté avec le carburant utilisé préalablement au départ de la procédure de changement ;
> $\delta T$ est la variation de la température du carburant, définie par l'utilisateur comme étant un paramètre.

**7.** Procédé selon la revendication 6, **caractérisé en ce que** la variation ou le gradient de viscosité ($\delta v$) dudit mélange de carburant est calculé de la manière suivante:

$$\delta v = \frac{|v_0 - v|}{t}$$

où :

> $\delta v$ est la variation ou le gradient de viscosité ;
> $v$ est la valeur cible de la viscosité ;
> $v_0$ est la viscosité du carburant préalablement au départ de la procédure de changement ;
> $t$ est le temps nécessaire pour atteindre la température cible *(T).*

**8.** Procédé selon l'une quelconque des revendications 1 à 7, **caractérisé en ce que** le pourcentage ($\%_{F1_{(t)}}$) du premier carburant (*F1*) et le pourcentage ($\%_{F2_{(t)}}$) du deuxième carburant (*F2*) sont calculés sous la forme :

$$\%_{F1_{(t)}} = \frac{\left( VBN_{(t)} - VBN_{F2_{(t)}} \right)}{\left( VBN_{F1_{(t)}} - VBN_{F2_{(t)}} \right)}$$

$$\%_{F2_{(t)}} = \frac{\left( VBN_{(t)} - VBN_{F1_{(t)}} \right)}{\left( VBN_{F2_{(t)}} - VBN_{F1_{(t)}} \right)}$$

où VBN est défini comme étant un « nombre de mélange de viscosité » et est un paramètre qui dépend de la viscosité du premier carburant (*F1*) et de la viscosité du deuxième carburant (*F2*).

**9.** Système permettant de commuter l'alimentation d'un premier carburant (*F1*) vers au moins un deuxième carburant (*F2*) dans un moteur à combustion interne (10) selon l'une quelconque des revendications 1 à 8, le système comprenant :

> - deux ou plus de deux réservoirs de stockage (12) pour le premier carburant (*F1*) et le deuxième carburant (*F2*), chaque réservoir de stockage (12) présentant une vanne de commutation (14) respective associée à celui-ci, ladite vanne étant capable de gérer de manière sélective l'acheminement d'un ou plusieurs carburant(s) (*F1, F2*) présélectionné(s) vers une ou plusieurs pompe(s) d'alimentation (16) munie(s) de filtres relatifs (18) ;
> - une chambre de mélange/désaérage (20) qui reçoit ledit ou lesdits carburant(s) (*F1, F2*) présélectionné(s) par l'intermédiaire de ladite ou desdites pompe(s) d'alimentation (16), ledit ou lesdits carburant(s) (*F1, F2*) présélectionné(s) étant ensuite acheminé(s) vers le moteur à combustion interne (10) par l'intermédiaire d'autres pompes (22) ;
> - un conduit permettant d'alimenter le carburant ou le mélange de carburant vers le moteur à combustion interne (10), agencé entre la chambre de mélange/désaérage (20) et ledit moteur à combustion interne (10).

**10.** Système selon la revendication 9, **caractérisé en ce que**, sur le conduit permettant d'alimenter le carburant ou le mélange de carburant vers le moteur à combustion interne (10), sont présents :

- un ou plusieurs moyen(s) de chauffage (24) ;
- un ou plusieurs moyen(s) de refroidissement (26) ;
- au moins un capteur de température (28) ;
- au moins un capteur de viscosité (30).

**11.** Système selon la revendication 9 ou 10, **caractérisé en ce qu'**il comprend un régulateur PID (proportionnel-intégral-différentiel) capable de vérifier et corriger en continu, par modification du fonctionnement des vannes de commutation (14), de possibles défauts d'alignements entre la viscosité cible et la viscosité réelle du mélange de carburant pénétrant dans le moteur à combustion interne (10).

Fig. 1

Fig. 2

Fig. 3

Fig. 4

**EP 3 049 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19828772 B4
- EP 2336529 A2
- US 20110000549 A1
- WO 2007109914 A1
- WO 2011088830 A1
- WO 2012117152 A1
- WO 2012136208 A1
- JP 2010270719 A